# EUROPEAN PATENT SPECIFICATION

(11) **EP 3 569 427 B1**
(45) Date of publication and mention of the grant of the patent: **30.09.2020**
(21) Application number: 19174150.3
(22) Date of filing: 13.05.2019
(51) Int. Cl.: B60G 7/02, B62D 21/03, B62D 21/11, B62D 21/12, B62D 21/20

(54) **WHEEL AXLE SUSPENSION WITH TUBULAR STRUT**
RADACHSAUFHÄNGUNG MIT ROHRSTREBE
SUSPENSION D'ESSIEU DE ROUE COMPORTANT UNE JAMBE TUBULAIRE

(30) Priority: 17.05.2018 NL 2020949
(43) Date of publication of application: 20.11.2019
(73) Proprietor: VDL Weweler B.V., 7325 WC Apeldoorn (NL)
(72) Inventor: BRUINJA, Marten Frank Ciarán, 7545 VV ENSCHEDE (NL); AALDERINK, Derk Geert, 7245 NV LAREN (NL); SCHRIER, Tom, 7323 TE APELDOORN (NL)
(74) Representative: EP&C

(56) References cited:
- EP-A1- 0 890 501
- EP-A1- 0 995 664
- EP-A1- 1 057 716
- EP-A1- 1 970 225
- EP-A2- 1 777 085
- DE-A1-102017 003 838
- US-A1- 2013 001 913

## Description

The invention relates to a sprung wheel axle suspension for a vehicle such as a truck, trailer or semi-trailer, said wheel axle suspension including an axle body extending substantially in the transverse direction of the vehicle, and furthermore including on each side of the vehicle:
- a bearing bracket associated with a vehicle chassis,
- a spring, preferably an air spring, secured to the vehicle chassis, and
- a trailing arm extending substantially in the longitudinal direction of the vehicle, which trailing arm is secured to the axle body, is pivotally connected with its front end portion to the bearing bracket to pivot around a pivot axis, and, further to the rear, has a spring mounting portion secured to the spring,
wherein the wheel axle suspension furthermore includes a strut assembly to provide transverse support to the bearing brackets, said strut assembly comprising a cross strut extending between the two bearing brackets, and a tensioning means arranged to clamp the cross strut between the bearing brackets.

A wheel axle suspension with a strut assembly is known from EP 995 664. In this known wheel axle suspension the bearing bracket is provided with a U-shaped closure piece at the lower end, which is connected to the bearing bracket by means of a pivot bolt for pivotally mounting the front end of the trailing arm to the bearing bracket. A cross beam, having a U-shaped cross section, extends between the two closure pieces, and has its open side directed towards the front. Each closure piece has a central elevation corresponding to the inner wall profile of the U-shaped cross beam and supports the head end of the cross beam. The cross beam is clamped between the two closure pieces and thus forms a rigid unit. To clamp the two closure pieces and the cross beam together use is made of strut rods for absorbing the transverse forces which act on the bearing bracket during operation. An upper end of the strut rods is attached to a chassis beam and the strut rod runs crosswise downwardly to the bearing bracket on the other lateral side of the chassis. The lower end of the strut rod has a male thread and is passed through a projection of the closure piece. The strut rod can be tensioned by a nut that is screwed on the threaded end portion of the strut rod and is tightened into engagement with the projection of the closure piece.

It is an object of the invention to provide a wheel axle suspension with an alternative strut assembly.

This object is achieved by a wheel axle suspension according to claim 1.

According to the invention the cross strut comprises at least one cross tube, and the tensioning means includes at least one tensioning bolt or rod that is received at least partially in the at least one cross tube and extends through at least a mounting hole in at least one of the bearing brackets to provide an axial pretension in the cross tube. By this structure according to the invention the cross tube and the bearing bracket are tightened together wherein a pretension is provided purely in an axial direction of the cross tube. The transverse forces are transferred from the bearing brackets into the cross strut purely in the axial direction thereof. There are no parts in this strut structure that are loaded with shear stresses by the transverse forces.

In a possible embodiment of the wheel axle suspension of the invention the cross strut consists of one single essentially straight cross tube that extends between the bearing brackets.

In this embodiment the tensioning means may comprise one tensioning rod, which at least at one of the end portions is provided with a male thread, said tensioning rod extending through the cross tube from the one carrying bracket to the other carrying bracket, and through mounting holes provided in the respective carrying brackets, and a nut cooperating with the male thread of the tensioning rod to tension the tensioning rod and the cross tube. The tensioning rod has a sufficient length which can be given a pretension which is advantageous for the absorption of tension variations and setting phenomena in the strut assembly. In this embodiment a prestress is also given to the cross tube.

In another embodiment the cross tube has threaded portions provided with a female thread, wherein the tensioning means comprise threaded bolts to extend through a hole in the respective bearing brackets and to be screwed in the respective threaded portions, wherein the female thread provided in the threaded portion of the tube is spaced apart from the corresponding end of the tube that is clamped against the bearing bracket. The female thread provided in the threaded portion of the tube is spaced apart from the corresponding end of the tube that is clamped against the bearing bracket. The female thread is then thus located at a distance from the end of the tube. This distance provides that a greater length of the threaded bolt can be given a pretension, which allows a better absorption of tension variations and setting phenomena. The non-threaded tube portion between the end of the tube and the female threaded portion is also given a prestress.

In possible embodiments the distance from the end of the tube to the threaded portion may in practice be 1mm or larger. The distance may be chosen in order to provide sufficient length of the bolt to provide a prestress in the bolt and also in the tube over the mentioned distance. In that regard the distance is preferably larger than 10 mm and may thus also be in the order of 100 mm or even larger.

Instead of one cross tube the cross strut may comprises two aligned cross tubes, each connected to one of the bearing brackets, which aligned cross tubes are coupled in the middle between the bearing brackets by a connector.

In this embodiment the tensioning means may comprise one single tensioning rod that extends through the aligned cross tubes. Alternatively the tensioning means may comprise two tensioning rods, each tensioning rod extending through one of the aligned cross tubes.

In another embodiment each of the aligned cross tubes has a first threaded portion provided with a female thread, and wherein the tensioning means comprise a first threaded bolt to extend through a hole in the associated bearing bracket and to be screwed in the first threaded portion.

The female thread provided in the first threaded portion of the tube is spaced apart from the corresponding first end of the tube that is clamped against the bearing bracket. The female thread is then thus located at a distance from the first end. This distance provides that a greater length of the threaded bolt can be given a pretension, which allows a better absorption of tension variations and setting phenomena. The non-threaded tube portion between the first end of the tube and the female threaded portion is also given a prestress in this embodiment.

In possible embodiments the distance from the first end of the tube to the first threaded portion may in practice be 1 mm or larger. The distance may be chosen in order to provide sufficient length of the bolt to provide a prestress in the bolt and also in the tube over the distance. In that regard the distance is preferably larger than 10 mm and may thus also be in the order of 100 mm or even larger.

In a possible embodiment of the invention the wheel axle suspension further comprises a central block arranged in the middle of the cross strut, and strut elements having an upper end that is secured to a chassis part above the carrying bracket and a lower end that is associated with the central block.

In case the cross strut comprises two aligned cross tubes, the central block preferably includes the connector that couples the aligned cross tubes.

In a possible further embodiment each of the aligned cross tubes has a second threaded portion provided with a female thread, and the tensioning means comprise a second threaded bolt to extend through a hole in the connector. The female thread may start directly at the second end of the tube, but it may also be spaced apart from the end in the same manner as described above in connection with the first end.

In an alternative possible further embodiment each of the aligned cross tubes has a second threaded portion provided with a male thread provided on the outer side of the tube, and wherein the tensioning means comprise a bore with a female thread in the connector to cooperate with the male thread on the tube.

In a possible embodiment the strut elements may be strut bars, possibly tubular strut bars. However also solid strut bars are possible, for example threaded rods. The strut elements may also be strut beams, which may have a closed hollow profile or an open profile such as an I-shaped profile or a U-shaped profile.

The strut bars may be made in one piece from a rod or tube with a circular cross section which is bent in substantially a V-shape. Preferably, the substantially V-shaped rod or tube has a central joining portion which joins the strut bars, wherein the central joining portion is at least partially received in an accommodation passage in the central block. In such an embodiment the central block can have two block halves, which are arranged from opposite sides against the central joining portion of the rod or tube and are tightened against each other, for example by a screw connection or a bolted connection.

In another possible embodiment the strut bars are connected with the lower end thereof with the central block by a threaded connection. In a practical example the lower end portion of the strut bar may be provided with a male thread and the central block may be provided with a female thread, which male and female thread cooperate to connect the strut bar to the central block.

In an embodiment wherein the trailing arm has an eyelet at the front end thereof, the tensioning rod may extend through the eyelet of the trailing arm to serve as a pivot pin having an axis that is the same as the pivot axis of the trailing arm. In an embodiment wherein the cross tube(s) is/are tensioned with a bolt, this bolt extends through the respective bearing bracket and may also extend through the associated eyelet of the trailing arm to serve as a pivot pin for the trailing arm. An advantage of such an embodiment is that the cross tube is coaxial with the pivot axis of the trailing arm, whereby the cross tube does not have to resist bending forces when transverse forces introduced by the trailing arm on the carrying bracket occur.

However, also embodiments are possible, in which the tensioning rod or bolt does not extend through the eyelet of the trailing arm. In particular, in such an embodiment the tensioning rod extends through a portion of the bearing bracket located offset of the pivot axis of the trailing arm. For example in a possible embodiment, the tensioning rod or bolt extends through a portion of the bearing bracket located below the front end of the trailing arm. Also other locations of the tensioning rod or bolt, such as above or in front of the front end of the trailing arm are possible.

The invention will be further elucidated with reference to the drawing, in which:
Fig. 1 shows a view in perspective of a first embodiment of a vehicle wheel axle suspension according to the invention,
Fig. 2 shows a cross sectional view of the suspension of Fig. 1,
Fig. 3 shows a detail of the suspension of Fig. 2,
Fig. 4 shows a cross sectional view of a second embodiment of a vehicle wheel axle suspension according to the invention,
Fig. 5 shows a detail of the suspension of Fig. 4,
Fig. 6 shows a cross sectional view of a third embodiment of a vehicle wheel axle suspension according to the invention,
Fig. 7 shows a detail of the suspension of Fig. 6,
Fig. 8 shows a cross sectional view of a fourth embodiment of a vehicle wheel axle suspension according to the invention,
Fig. 9 shows a detail of the suspension of Fig. 8,
Fig. 10 shows another detail of the suspension of Fig. 8,
Fig. 11 shows a view in perspective of a fifth embodiment of a vehicle wheel axle suspension according to the invention,
Fig. 12 shows a cross sectional view of the suspension of Fig. 11,
Fig. 13 shows a detail of the suspension of Fig. 12,
Fig. 14 shows a view in perspective of a sixth embodiment of a vehicle wheel axle suspension according to the invention,
Fig. 15 shows a cross sectional view of the suspension of Fig. 14, and
Fig. 16 shows a detail of the suspension of Fig. 15.

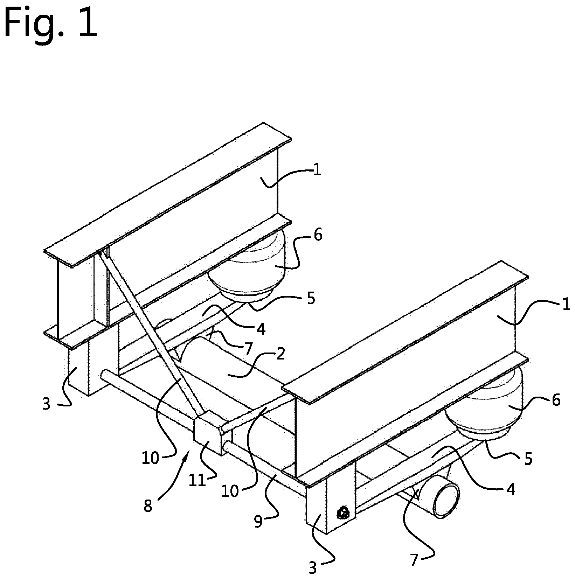

Fig. 1 shows schematically a first embodiment of a wheel axle suspension of a vehicle according to the invention. The wheel axle suspension is attached to a vehicle chassis comprising longitudinal chassis beams 1, in this example I-profiled beams, but this may also be another profile.

The wheel axle suspension comprises an axle body 2 that extends in the transverse direction of the vehicle. At the ends of the axle body 2 the vehicle wheels can be mounted and other parts such as brakes. The axle body 2 is suspended from the vehicle chassis by means of a sprung wheel axle suspension, in particular an air-sprung wheel axle suspension.

This wheel axle suspension comprises on each side of the vehicle a bearing bracket 3 attached to the chassis beam 1. The suspension furthermore comprises a trailing arm 4 which has a front end that is pivotally mounted to the bearing bracket 3. The trailing arm 4 in this example has a rear end having an air-spring mounting portion 5 to which an air spring 6 is secured. An upper end of the air spring 6 supports the underside of the chassis beam 1.

The axle body 2 is attached to the two trailing arms 4. In this example an intermediate axle pad 7 is arranged between the axle body 2 and the trailing arm 4. The trailing arm 4, the axle body 2 and the axle pad 7 may be clamped together by U-shaped bolts (not shown) or may be attached in another way known in the art. This is not essential for the present invention.

The invention focusses on the strut assembly that has the function to absorb transverse forces applied on the bearing brackets 3 by the wheel axle suspension during operation of the vehicle.

In Fig. 1 the strut assembly is indicated with reference numeral 8 and includes a cross strut 9 that extends crosswise between the two bearing brackets 3. Furthermore the strut assembly comprises a pair of inclined strut elements 10 which extend upwardly and towards the lateral sides from a central block 11 arranged in the middle on the cross strut 9. Each of the strut elements 10 is attached to the chassis, in this example to one of the chassis beams 1.

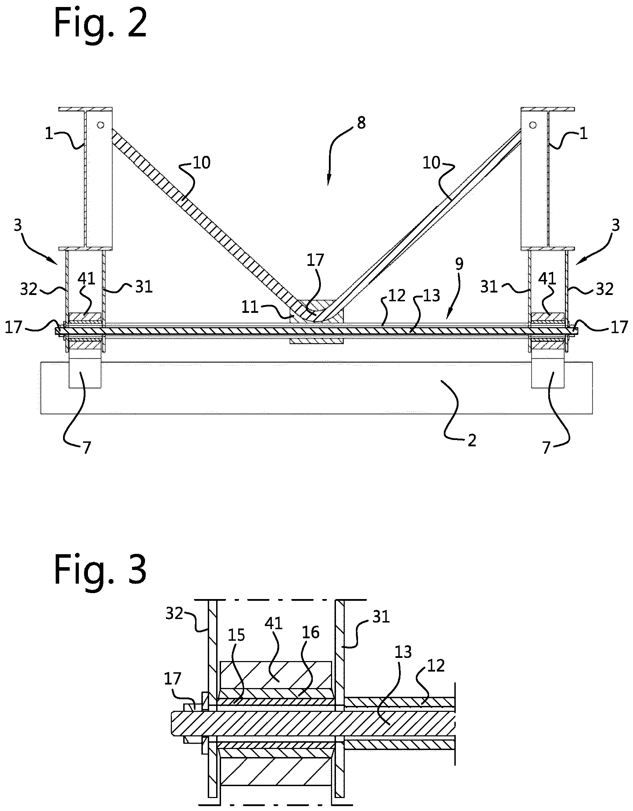

In Fig. 2 is shown in more detail how the strut assembly 8 is configured. The cross strut 9 comprises a cross tube 12, preferably a metal tube, which extends from an inner side plate 31 (see also Fig. 3) of the one bearing bracket 3 to an inner side plate 31 of the other bearing bracket 3. The tube 12 extends through a through passage in the central block 11 and is fixed thereto, for example by means of clamping, formfitting, adhesion, or a bolt connection.

A tensioning rod 13 extends through the cross tube 12. The tensioning rod 13 also extends through holes in the side plates 31, 32 of the bearing bracket 3. In this example at the front end of the trailing arm 4 an eyelet 41 is formed. In the eyelet 41 a so called silentblock is arranged, which includes a metal bushing 15 with a rubber lining 16 on the radial outer side, as can be seen in Fig. 3. The tensioning rod 13 extends through the eyelet 41 and the silentblock 15, 16.

At least the end portions, but possibly the entire length of the tensioning rod 13 is provided with a male thread. At either end a corresponding nut 17 is screwed on the threaded end of the tensioning rod 13 whereby the rod 13 is pretensioned and the cross tube 12 is clamped between the inner plates 31 of the bearing brackets 3 and is prestressed.

The inclined strut elements 10 are formed from a single rod, which may be solid or tubular, that is bent. The bend 17 of the rod joins the strut elements 10 and is received in an accommodation passage or cavity in the central block 11, whereby the strut elements 10 are fixed to the central block 11. In this way a so called K-strut assembly is formed.

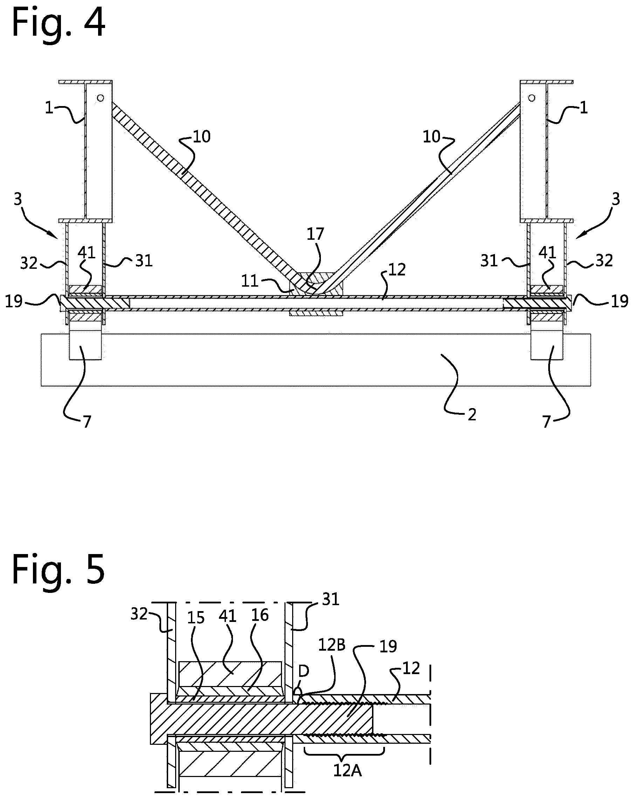

In Fig. 4 another embodiment of the strut assembly is shown. In this embodiment the same parts are indicated with the same reference numerals as in the first embodiment. Also in this embodiment the cross strut 9 comprises a cross tube 12, preferably a metal tube, which extends from an inner side plate 31 (see also Fig. 5) of the one bearing bracket 3 to an inner side plate 31 of the other bearing bracket 3.

Threaded bolts 19 are extending through the holes in the side plates 31, 32 of the bearing bracket 3, and through the silentblock 15, 16 which is arranged in the eyelet 41 of the trailing arm 4. The inner side of the cross tube 12 at threaded portions 12A thereof (see Fig. 5) is provided with a female thread. These threaded portions 12A start at a distance D from the end face of the tube as is visible in Fig. 5. The bolts 19 are screwed in the respective ends of the cross tube 12 and cooperate with the female thread portions 12A of the cross tube 12. Thereby the respective ends of the cross tube 12 are tightened against the respective inner plates 31 of the bearing brackets 3. In this embodiment the bolts 19 are thus functioning as a tensioning means to tension the cross tube 12, but at the same time function as a pivot bolt for the trailing arm 4. The distance D may be small, e.g. 1 mm, but may also be larger, e.g. 10 mm or even in the order of magnitude of 100 mm. The non-threaded portion 12B between the end face of the tube 12 and the threaded portion 12A provides the effect that the length of the bolt 19 that is tensioned is longer than in a case wherein where the female thread starts directly at the end of the tube 12. This allows a better absorption of tension variations and setting phenomena. The non-threaded tube portion 12B between the end of the tube 12 and the female threaded portion 12A is also given a prestress in this embodiment by tightening the bolt 19.

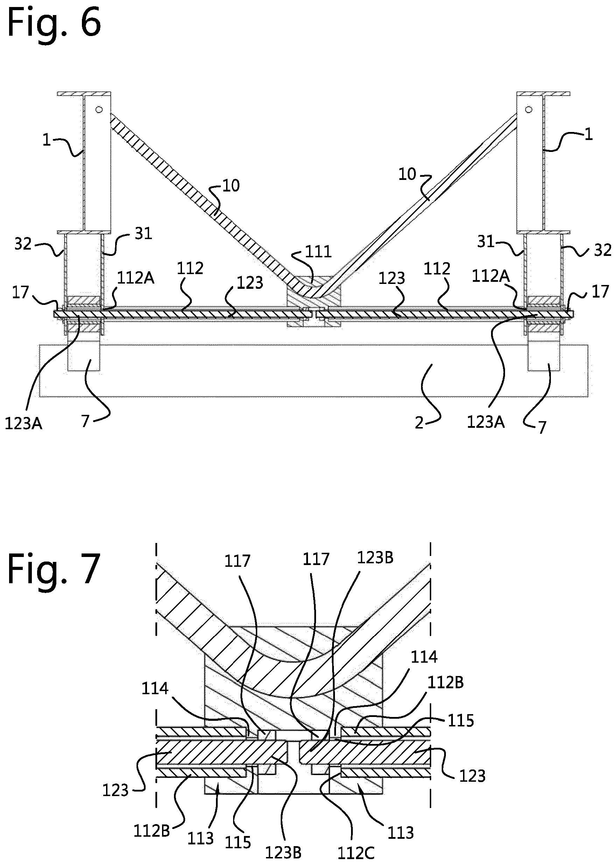

In Fig. 6 is shown yet another embodiment of the strut assembly according to the invention. In this embodiment the strut assembly comprises two cross tubes 112. The cross tubes 112 are aligned and are each connected to a bearing bracket 3 and to a central block 111.

The central block 111 has a socket portion 113 in which an end portion 112B of the cross tube 112 is inserted. The socket portion 113 has an abutment wall 114 with a bore 115 as can be best seen in Fig. 7. The end face 112C of the cross tube 112 abuts the abutment wall 114.

The other end 112A of the cross tube 112 abuts the inner side plate 31 of the bearing bracket 3 in the same way as is shown in Fig. 3.

A tensioning rod 123 extends through the cross tube 112. One end portion 123A of the tensioning rod 123 extends through openings in the side plates 31, 32 of the bearing bracket 3 and through the silentblock 15, 16 in the eyelet 41 of the trailing arm 4. This is the same as is shown in Fig. 3 for the tensioning rod 13. At the end portion of the tensioning rod 123 a male thread is provided, which is adapted to cooperate with a nut 17. The other end portion 123B of the tensioning rod 123 extends through the bore 115 in the abutment wall 114 in the central block 111. A nut 117 is screwed on the threaded end portion 123B. The tensioning rod 123 and the nuts 17 and 117 are the tensioning means used to prestress the cross tube 112. The socket portion 113 forms the connector that connects the tensioning rod 123 to the central block 111.

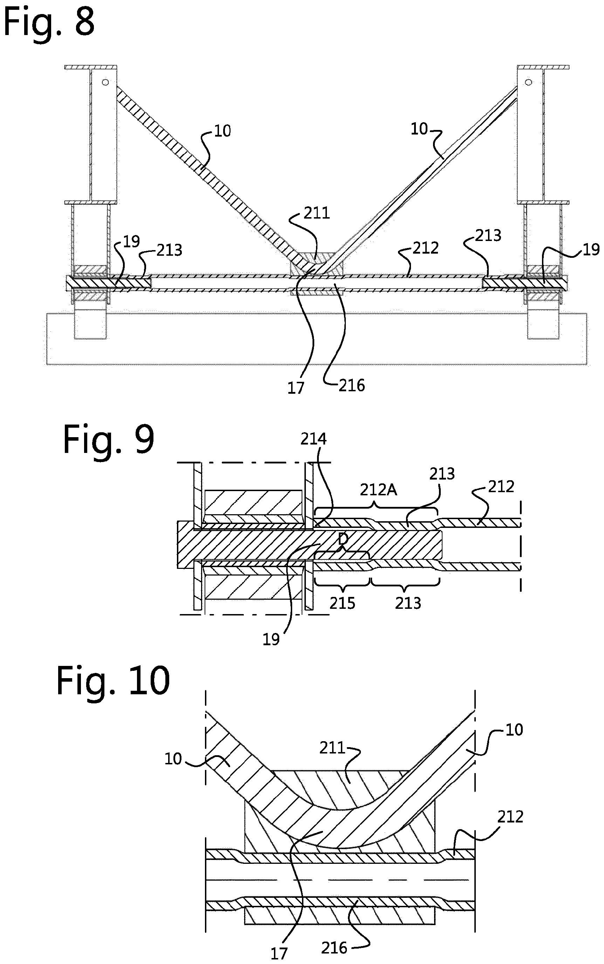

Yet another embodiment of a wheel axle suspension according to the invention is shown in Figs. 8 - 10. This embodiment has a lot in common with the embodiment shown in Figs. 4 - 5 in that it has a single cross tube 212, wherein bolts are screwed in the end portions of the cross tube and extend through the bearing brackets 3 and the eyelet 41 of the trailing arm 4. The difference with the embodiment of Fig. 4 - 5 is that the cross tube 212 has longitudinal sections with a reduced diameter.

In particular, the cross tube 212 has at its end portions 212A, possibly at a distance D from the end face 214 of the tube 212 a section 213 with a reduced diameter. This reduced diameter section 213 is provided with an inner thread (i.e. a female thread). The inner thread is able to cooperate with a threaded bolt 19 which is inserted through the plates 31, 32 of the bearing bracket 3 and the eyelet 41 of the trailing arm 4 and is screwed in the end portion of the cross tube 212. The threaded bolt 19 thus functions as a pivot bolt for the trailing arm 4 and is used to tension the cross tube 212, like in the embodiment shown figures 4 - 5. The female thread is thus located at a distance D from the end 214 of the tube 212. This provides the effect that the length of the bolt 19 that is tensioned is longer than for instance the bolt 19 in Fig. 5, where the female thread starts directly at the end of the tube 12. This allows a better absorption of tension variations and setting phenomena. The non-threaded tube portion 215 between the first end 214 of the tube and the female threaded portion at section 213 is also given a prestress in this embodiment. The distance D may be 1 mm, but also larger, e.g. 10 mm or even of the order of magnitude of 100 mm.

The cross tube 212 may also have a centre region 216 with a reduced diameter as is shown in Fig. 10. This centre region 216 of the cross tube 212 is arranged in a passage or cavity in the centre block 211 with an adapted dimension. The larger diameter of the tube 212 adjacent the centre region 216 thereof results in that the centre block 211 cannot shift along the cross tube 212 and is retained in position in the centre. To be able to position the centre region 216 in the centre block 211, the block 211 could for example be made in two parts which are arranged around the cross tube 212 at the centre region 216 and then for example clamped together by a screw or bolt connection.

Like the embodiment of Figs. 2 and 4, this embodiment of Fig. 8 also has inclined strut elements 10 which are formed from a single rod, which may be solid or tubular, that is bent. The bend 17 of the rod joins the strut elements 10 and a passage or cavity in the central block 11 receives the bend 17, whereby the strut elements 10 are fixed to the central block 11, whereby a so-called K-strut assembly is formed.

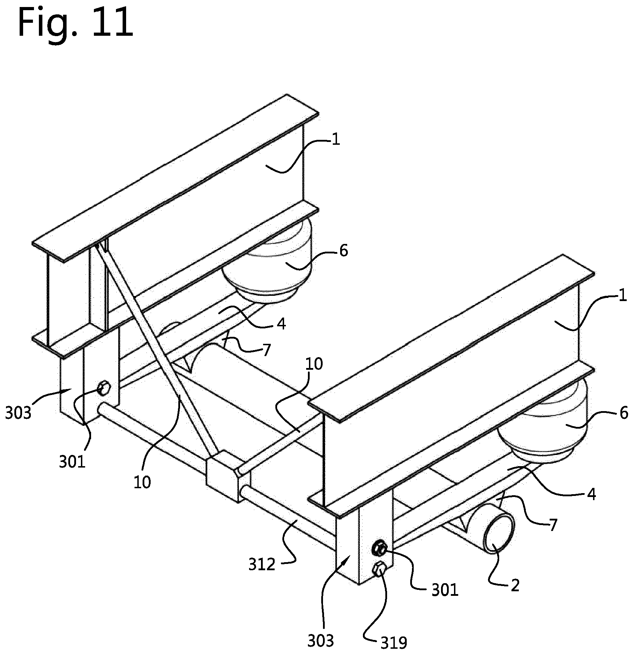

Figs. 11 - 13 show yet another embodiment of a wheel axle suspension according to the invention. This embodiment has a cross bar 312, in particular a tubular metal cross bar, which is not arranged in line with the pivot axes of the trailing arms 4, like in the previous embodiments, but is arranged offset of said pivot axes. In the particular embodiment shown in Figs. 11 - 13 the cross bar 312 may be secured below the pivot axes of the trailing arms 4. It is however also possible to mount the cross bar above or in another position with respect to the pivot axes.

The bearing brackets 303 in this embodiment each have an aperture in the inner and outer side plates 331, 332 for the pivot bolt 301 that extends through the eyelet 41 and the silentblock 15, 16. However, also another trailing arm with another pivoting structure may be arranged.

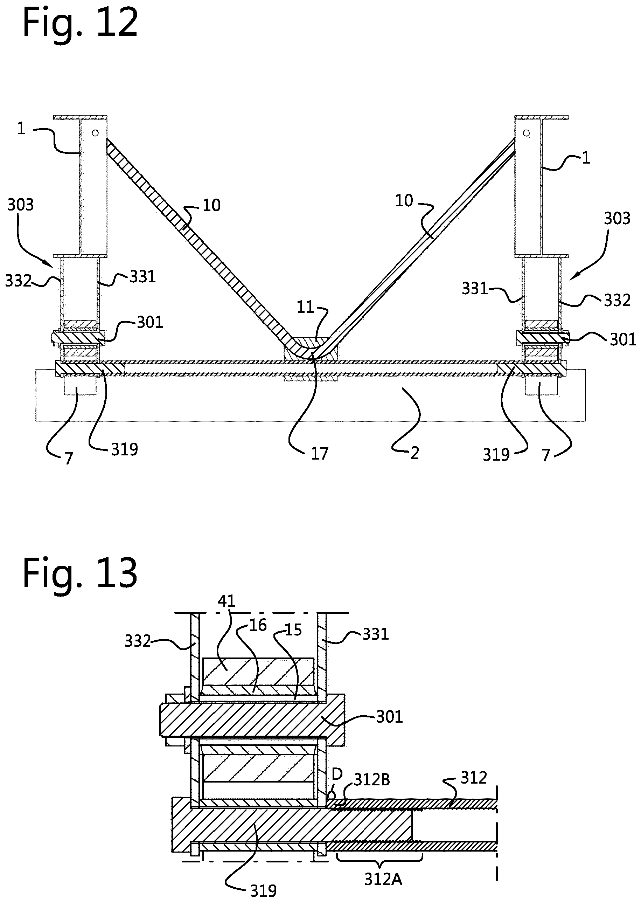

The side plates 331, 332 of the bearing brackets 303 are provided with a hole for passing through a tensioning bolt 319. The end portions of the cross tube 312 are provided with an inner thread (female thread) 312A, which starts at a distance D from the end face of the tube 312 (see Fig. 13), and which cooperates with the male thread of the tensioning bolt 319. The first portion of the tube with a length D is a non-threaded portion 312B. This length may vary, and may be small like 1 mm, but may also be larger, like 10 mm, but also in the order of magnitude of 100 mm. The tensioning bolts 319 are screwed in the end portions of the cross tube 312 to secure and tension the cross tube 312. Instead of the configuration with tensioning bolts 319 also an alternative embodiment wherein a tensioning rod extends through the cross tube 312 (cf. Fig. 2) and is tensioned by nuts is possible.

The cross tube 312 extends through a passage in a central block 11, which is comparable to the embodiment of Fig. 4. The central block 11 furthermore has a passage or a cavity for the bend portion 17 of the rod that forms the strut elements 10 to form a K-strut configuration similar to what is shown in Fig. 4.

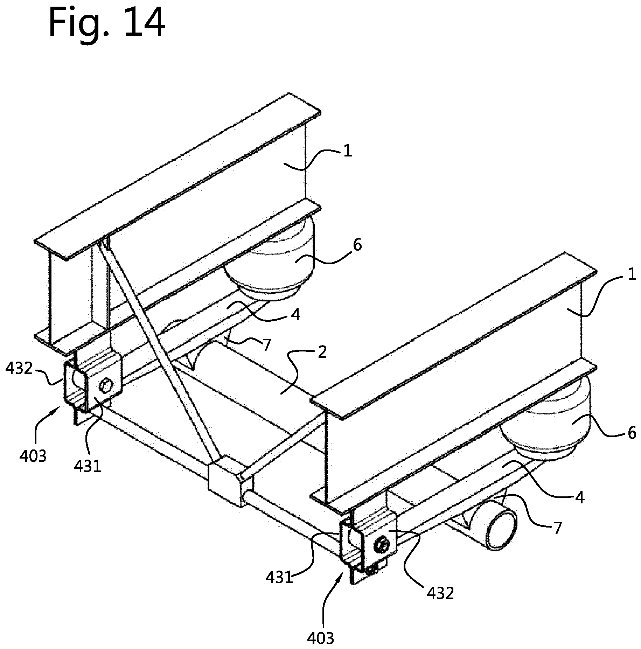

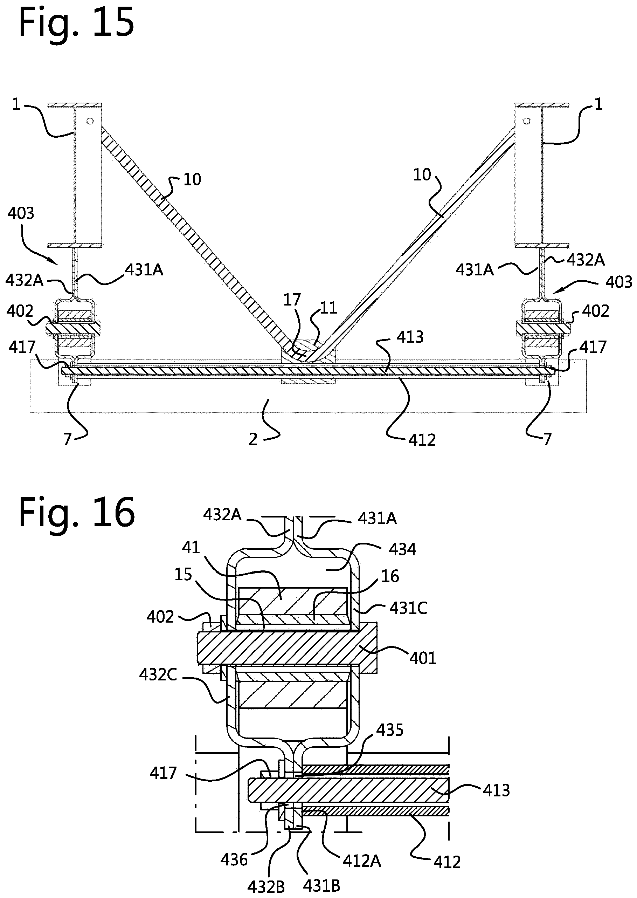

Fig. 14 - 16 show a further embodiment of a wheel axle suspension according to the invention. In this embodiment the bearing brackets 403 comprises two side plates 431 and 432 which are formed with an upper abutment flange 431A, 432A and a lower abutment flange 431B, 432B. In an intermediate region 431C and 432C between said upper and lower abutment flanges 431A, 432A, 431B, 432B the plates 431 and 432 define a cavity 434 in which the front end of the trailing arm 4 is received.

In the particular embodiment shown in Figs. 14 - 16 the front end of the trailing arm 4 is formed as an eyelet 41 in which a silentblock 15, 16 is arranged. The intermediate region 431C and 432C is provided with a hole for passing through a pivot bolt 401 that extends through the eyelet 41 and the silentblock 15, 16. A nut 402 is screwed on the pivot bolt 401 and tightened to clamp the metal bushing 15 of the silentblock between the plates 431 and 432.

It must be noted that also another embodiment is conceivable wherein the trailing arm has another pivoting structure and wherein the intermediate region 431C is be adapted to accommodate that pivot structure.

The lower flanges 431B and 432B are each provided with a hole 435 and 436 respectively.

The suspension has a cross tube 412 which abuts with the respective end faces 412A against the respective inner lower abutment flanges 431B of the bearing bracket 403. A tensioning rod 413 extends through the cross tube 412 and extends at both ends through the openings 435 and 436. Nuts 417 at both ends of the tensioning rod 413 are used to tension the tensioning rod 413, such that the cross tube 412 is clamped between the flanges 431B and prestressed. The tensioning rod has sufficient length to provide pretension to absorb setting phenomena and stress variations in the strut assembly. In an alternative embodiment, bolts could be used , instead of the tensioning rod. The bolts cooperate with female thread provided in the tube end portions. However, in particular in an embodiment, wherein the abutment flanges 431B and 432B are tightened against each other, the bolt needs to provide an increased tensioning length, which may be provided by providing the female thread at a distance from the end of the tube similar to what is shown in Fig. 9.

The cross tube 412 extends through a passage in a central block 11, which is comparable to the embodiment of Fig. 4. The central block 11 furthermore has a passage or a cavity for the bend portion 17 of the rod that forms the strut elements 10 to form a K-strut configuration similar to what is shown in Fig. 4.

## Claims

1. A sprung wheel axle suspension for a vehicle such as a truck, trailer or semi-trailer, said wheel axle suspension including an axle body (2) extending substantially in the transverse direction of the vehicle, and furthermore including on each side of the vehicle:
- a bearing bracket (3; 303; 403) associated with a vehicle chassis (1),
- a spring, preferably an air spring (6), supporting the vehicle chassis (1), and
- a trailing arm (4) extending substantially in the longitudinal direction of the vehicle, which trailing arm (4) is secured to the axle body (2), is pivotally connected with its front end portion to the bearing bracket (3; 303; 403) to pivot around a pivot axis, and, further to the rear, has a spring mounting portion (5) secured to the spring (6),
wherein the wheel axle suspension furthermore includes a strut assembly (8) to provide transverse support to the bearing brackets (3; 303; 403), said strut assembly (8) comprising a cross strut (9) extending between the two bearing brackets (3; 303; 403), and a tensioning means arranged to clamp the cross strut (9) between the bearing brackets (3; 303; 403),
**characterized in that** the cross strut (9) comprises at least one cross tube (12; 112; 312), and
**in that** the tensioning means includes at least one tensioning bolt (19; 319) or rod (13; 123) that is received at least partially in the at least one cross tube (12; 112) and extends through at least a mounting hole in at least one of the bearing brackets (3; 303; 403) to provide an axial pretension in the cross tube (12; 112; 312; 412).

2. Wheel axle suspension according to claim 1, wherein the cross strut consists of one cross tube (12; 312; 412) that extends between the bearing brackets (3; 303; 403).

3. Wheel axle suspension according to claim 1, wherein the cross strut comprises two aligned cross tubes (112), each connected to one of the bearing brackets (3), which aligned cross tubes (112) are coupled in the middle between the bearing brackets (3) by a connector (113).

4. Wheel axle suspension according to any of the preceding claims, further comprising a central block (11; 111; 211) arranged in the middle of the cross strut (9), and strut elements (10) having an upper end that is secured to a chassis part (1) above the carrying bracket (3) and a lower end that is associated with the central block (11; 111; 211).

5. Wheel axle suspension according to claim 3 and 4, wherein the central block (111) includes the connector (113).

6. Wheel axle suspension according to claim 4, wherein the strut elements (10) are strut bars or strut beams.

7. Wheel axle suspension according to claim 2, wherein the tensioning means comprises one tensioning rod (13; 413), which at least at one of the end portions is provided with a male thread, said tensioning rod (13; 413) extending through the cross tube (12; 412) from the one carrying bracket (3; 403) to the other carrying bracket (3; 403), and through mounting holes provided in the respective carrying brackets (3; 403), and a nut (17; 417) cooperating with the male thread of the tensioning rod (13; 413) to tension the tensioning rod (13; 413) and the cross tube (12; 412).

8. Wheel axle suspension according to claim 3, wherein the tensioning means comprises one tensioning rod that extends through the aligned cross tubes (112), or alternatively comprises two tensioning rods (123), each tensioning rod (123) extending through one of the aligned cross tubes (112).

9. Wheel axle suspension according to claim 7 or 8, wherein the trailing arm (4) has an eyelet (41) at the front end thereof and wherein the tensioning rod (13; 123) extends through the eyelet (41) of the trailing arm (4) to serve as a pivot pin having an axis that is the same as the pivot axis of the trailing arm (4).

10. Wheel axle suspension according to claim 7 or 8, wherein the tensioning rod (413) extends through a portion of the bearing bracket (403) located offset of the pivot axis of the trailing arm (4), e.g. below the front end of the trailing arm (4).

11. Wheel axle suspension according to claim 2, wherein the cross tube has threaded portions (12A; 213; 312A) provided with a female thread, and wherein the tensioning means comprise threaded bolts (19) to extend through a hole in the respective bearing brackets (3; 303) and to be screwed in the respective threaded end portions (12A; 213; 312A), wherein the female thread provided in the threaded portion (12A; 213; 312A) of the tube is spaced apart from the corresponding end of the tube that is clamped against the bearing bracket, wherein, preferably, the distance (D) between said threaded portion (12A; 213; 312A) and said corresponding end is at least 1 mm.

12. Wheel axle suspension according to claim 3, wherein each of the aligned cross tubes (112) has a first threaded portion provided with a female thread, and wherein the tensioning means comprise a first threaded bolt to extend through a hole in the associated bearing bracket and to be screwed in the first threaded portion.

13. Wheel axle suspension according to claim 12, wherein:
- each of the aligned cross tubes has a second threaded portion provided with a female thread, and wherein the tensioning means comprise a second threaded bolt to extend through a hole in the connector; or
- each of the aligned cross tubes has a second threaded portion provided with a male thread provided on the outer side of the tube, and wherein the tensioning means comprise a bore with a female thread in the connector to cooperate with the male thread on the tube.

14. Wheel axle suspension according to any of the claims 11 - 13, wherein the trailing arm (4) has an eyelet (41) at the front end thereof, and wherein the bolt or first bolt which extends through the respective bearing bracket also extends through the associated eyelet (41) of the trailing arm (4) to serve as a pivot pin for the trailing arm (4).

15. Wheel axle suspension according to claim 6, wherein:
- the strut bars (10) are made in one piece from a rod or tube with a circular cross section which is bent in substantially a V-shape, wherein, preferably, the substantially V-shaped rod or tube has a central joining portion (17) which joins the strut bars, wherein the central joining portion is at least partially received in an accommodation passage in the central block (11; 111; 211); or
- the strut bars are connected with the lower end thereof with the central block by a threaded connection.

## Patentansprüche

1. Gefederte Radachsaufhängung für ein Fahrzeug, wie etwa einen Lastwagen, Anhänger oder Sattelauflieger, wobei die Radachsaufhängung einen Achskörper (2) umfasst, der sich im Wesentlichen in der Querrichtung des Fahrzeugs erstreckt, und die ferner auf jeder Seite des Fahrzeugs umfasst:
- eine Lagerhalterung (3; 303; 403), die mit einem Fahrzeuggestell (1) verbunden ist,
- eine Feder, bevorzugt eine Luftfeder (6), die das Fahrzeugfahrgestell (1) lagert, und
- einen Längslenker (4), der sich im Wesentlichen in der Längsrichtung des Fahrzeugs erstreckt, welcher Längslenker (4) am Achskörper (2) angebracht ist, mit seinem vorderen Endabschnitt schwenkbar mit der Lagerhalterung (3; 303; 403) verbunden ist, um um eine Schwenkachse zu schwenken, und weiter nach hinten hin einen Federmontageabschnitt (5) aufweist, der an der Feder (6) angebracht ist,
wobei die Radachsaufhängung des Weiteren eine Strebenanordnung (8) umfasst, um den Lagerhalterungen (3; 303; 403) eine querverlaufende Unterstützung zu bieten, wobei die Strebenanordnung (8) eine Querstrebe (9), die zwischen den zwei Lagerhalterungen (3; 303; 403) verläuft, und ein Spannmittel umfasst, welches Spannmittel angeordnet ist, um die Querstrebe (9) zwischen den Lagerhalterungen (3; 303; 403) einzuklemmen,
**dadurch gekennzeichnet, dass** die Querstrebe (9) zumindest ein Querrohr (12; 112; 312) umfasst, und
**dass** das Spannmittel zumindest einen Spannbolzen (19; 319) oder -stab (13; 123) umfasst, der zumindest teilweise in dem zumindest einen Querrohr (12; 112) aufgenommen ist und sich durch zumindest ein Montageloch in zumindest einer der Lagerhalterungen (3; 303; 403) erstreckt, um eine axiale Vorspannung im Querrohr (12; 112; 312; 412) bereitzustellen.

2. Radachsaufhängung nach Anspruch 1, wobei die Querstrebe aus einem Querrohr (12; 312; 412) besteht, das sich zwischen den Lagerhalterungen (3; 303; 403) erstreckt.

3. Radachsaufhängung nach Anspruch 1, wobei die Querstrebe zwei miteinander fluchtende Querrohre (112) umfasst, die jeweils mit einer der Lagerhalterungen (3) verbunden sind, welche miteinander fluchtende Querrohre (112) in der Mitte zwischen den Lagerhalterungen (3) durch ein Verbindungsstück (113) gekoppelt sind.

4. Radachsaufhängung nach einem der vorstehenden Ansprüche, die des Weiteren einen zentralen Block (11; 111; 211), der in der Mitte der Querstrebe (9) angeordnet ist, und Strebenelemente (10) umfasst, welche Strebenelemente (10) ein oberes Ende, das an einem Fahrgestellteil (1) oberhalb der Traghalterung (3), und ein unteres Ende, das mit dem zentralen Block (11; 111; 211) verbunden ist, aufweisen.

5. Radachsaufhängung nach Anspruch 3 und 4, wobei der zentrale Block (111) das Verbindungsstück (113) umfasst.

6. Radachsaufhängung nach Anspruch 4, wobei die Strebenelemente (10) Strebenstangen oder Strebenbalken sind.

7. Radachsaufhängung nach Anspruch 2, wobei das Spannmittel einen Spannstab (13; 413), der an zumindest einem der Endabschnitte mit einem Außengewinde versehen ist, wobei sich der Spannstab (13; 413) durch das Querrohr (12; 412) von der einen Traghalterung (3; 403) zu der anderen Traghalterung (3; 403) und durch Montagelöcher, die in den jeweiligen Traghalterungen (3; 403) vorgesehen sind, erstreckt, sowie eine Mutter (17; 417) umfasst, die mit dem Außengewinde des Spannstabs (13; 413) zusammenwirkt, um den Spannstab (13; 413) und das Querrohr (12; 412) zu spannen.

8. Radachsaufhängung nach Anspruch 3, wobei das Spannmittel einen Spannstab umfasst, der sich durch die miteinander fluchtenden Querrohre (112) erstreckt, oder alternativ zwei Spannstäbe (123) umfasst, wobei sich jeder Spannstab (123) durch eines der miteinander fluchtenden Querrohre (112) erstreckt.

9. Radachsaufhängung nach Anspruch 7 oder 8, wobei der Längslenker (4) am vorderen Ende eine Öse (41) aufweist, und wobei der Spannstab (13; 123) sich durch die Öse (41) des Spannstabs (4) erstreckt, um als ein Schwenkzapfen zu dienen, der eine Achse aufweist, die die gleiche wie die Schwenkachse des Längslenkers (4) ist.

10. Radachsaufhängung nach Anspruch 7 oder 8, wobei der Spannstab (413) sich durch einen Abschnitt der Lagerhalterung (403) erstreckt, der sich von der Schwenkachse des Längslenkers (4) versetzt befindet, z.B. unterhalb des vorderen Endes des Längslenkers (4).

11. Radachsaufhängung nach Anspruch 2, wobei das Querrohr Gewindeabschnitte (12A; 213; 312A) aufweist, die mit einem Innengewinde versehen sind, und wobei das Spannmittel Gewindebolzen (19) umfasst, um sich durch ein Loch in den jeweiligen Lagerhalterungen (3; 303) zu erstrecken und in die jeweiligen Gewindeendabschnitte (12A, 213; 312A) geschraubt zu werden, wobei das Innengewinde, das im Gewindeabschnitt (12A; 213; 312A) des Rohrs vorgesehen ist, von dem entsprechenden Ende des Rohrs beabstandet ist, das gegen die Lagerhalterung geklemmt ist, wobei bevorzugt der Abstand (D) zwischen dem Gewindeabschnitt (12A; 213; 312A) und dem entsprechenden Ende zumindest 1 mm beträgt.

12. Radachsaufhängung nach Anspruch 3, wobei jedes der miteinander fluchtenden Querrohre (112) einen ersten Gewindeabschnitt umfasst, der mit einem Innengewinde versehen ist, und wobei das Spannmittel einen ersten Gewindebolzen umfasst, um sich durch ein Loch in der assoziierten Lagerhalterung zu erstrecken und in den ersten Gewindeabschnitt geschraubt zu werden.

13. Radachsaufhängung nach Anspruch 12; wobei:
- jedes der miteinander fluchtenden Querrohre einen zweiten Gewindeabschnitt umfasst, der mit einem Innengewinde versehen ist, und wobei das Spannmittel einen zweiten Gewindebolzen umfasst, um sich durch ein Loch in dem Verbindungsstück zu erstrecken; oder
- jedes der miteinander fluchtenden Querrohre einen zweiten Gewindeabschnitt umfasst, der mit einem Außengewinde versehen ist, das an der Außenseite des Rohrs vorgesehen ist, und wobei das Spannmittel eine Bohrung mit einem Innengewinde im Verbindungsstück umfasst, um mit dem Außengewinde am Rohr zusammenzuwirken.

14. Radachsaufhängung nach einem der Ansprüche 11 - 13, wobei der Längslenker (4) am vorderen Ende eine Öse (41) aufweist, und wobei der Bolzen oder erste Bolzen, der sich durch die jeweilige Lagerhalterung erstreckt, sich auch durch die assoziierte Öse (41) des Längslenkers (4) erstreckt, um als ein Schwenkzapfen für den Längslenker (4) zu dienen.

15. Radachsaufhängung nach Anspruch 6; wobei:
- die Strebenstangen (10) einstückig aus einem Stab oder Rohr mit einem kreisförmigen Querschnitt, der/das im Wesentlichen V-förmig gebogen ist, gefertigt ist, wobei der im Wesentlichen V-förmige Stab oder das Rohr bevorzugt einen zentralen Verbindungsabschnitt (17) aufweist, der die Strebenstangen verbindet, wobei der zentrale Verbindungsabschnitt zumindest teilweise in einem Aufnahmedurchgang im zentralen Block (11; 111; 211) aufgenommen ist; oder
- die Strebenstangen mit dem unteren Ende davon mit dem zentralen Block durch eine Gewindeverbindung verbunden sind.

## Revendications

1. Suspension d'essieu de roue pour un véhicule tel qu'un camion, une remorque ou une semi-remorque, ladite suspension d'essieu de roue comprenant un corps d'essieu (2) s'étendant sensiblement dans la direction transversale du véhicule, et comprenant en outre de chaque côté du véhicule:
- un corps de palier (3; 303; 403) associé à un châssis de véhicule (1),
- un ressort, de préférence un ressort (6) pneumatique, supportant le châssis du véhicule (1), et
- un bras oscillant (4) s'étendant sensiblement dans la direction longitudinale du véhicule, lequel bras oscillant (4) est fixé au corps d'essieu (2), est relié de façon pivotante avec sa partie d'extrémité avant au corps de palier (3; 303; 403) pour pivoter autour d'un axe de pivotement et, plus à l'arrière, a une partie de montage de ressort (5) fixée au ressort (6),
dans lequel la suspension d'essieu de roue comprend en outre un ensemble d'entretoise (8) pour fournir un support transversal aux corps de palier (3; 303; 403), ledit ensemble d'entretoise (8) comprenant une entretoise transversale (9) s'étendant entre les deux corps de palier (3; 303; 403), et des moyens de mise en tension agencés pour serrer l'entretoise transversale (9) entre les corps de palier (3; 303; 403),
**caractérisé en ce que** l'entretoise transversale (9) comprend au moins un tube transversal (12; 112; 312), et
**en ce que** les moyens de mise en tension comprennent au moins un boulon de tension (19; 319) ou une tige (13; 123) qui est reçue au moins partiellement dans le au moins un tube transversal (12; 112) et s'étend à travers au moins un trou de montage dans au moins l'un des corps de palier (3; 303; 403) pour fournir une pré-tension axiale dans le tube transversal (12; 112; 312; 412).

2. Suspension d'essieu de roue selon la revendication 1, dans laquelle l'entretoise transversale se compose d'un tube transversal (12; 312; 412) qui s'étend entre les corps de palier (3; 303; 403).

3. Suspension d'essieu de roue selon la revendication 1, dans laquelle l'entretoise transversale comprend deux tubes transversaux alignés (112), chacun connecté à l'un des corps de palier (3), lesquels tubes transversaux alignés (112) sont couplés au milieu entre les corps de palier (3) par un connecteur (113).

4. Suspension d'essieu de roue selon l'une quelconque des revendications précédentes, comprenant en outre un bloc central (11; 111; 211) disposé au milieu de l'entretoise transversale (9), et des éléments d'entretoise (10) ayant une extrémité supérieure qui est fixée à une partie de châssis (1) au-dessus du corps porteur (3) et une extrémité inférieure qui est associée au bloc central (11; 111; 211).

5. Suspension d'essieu de roue selon les revendications 3 et 4, dans laquelle le bloc central (111) comprend le connecteur (113).

6. Suspension d'essieu de roue selon la revendication 4, dans laquelle les éléments d'entretoise (10) sont des barres d'entretoise ou des poutres d'entretoise.

7. Suspension d'essieu de roue selon la revendication 2, dans laquelle les moyens de mise en tension comprennent une tige de tension (13; 413), qui, au moins à l'une des parties d'extrémité, est pourvue d'un filetage mâle, ladite tige de tension (13; 413) s'étendant à travers le tube transversal (12; 412) depuis le corps porteur (3; 403) à l'autre corps porteur (3; 403), et à travers des trous de montage prévus dans des corps porteurs respectifs (3; 403), et un écrou (17; 417) coopérant avec le filetage mâle de la tige de tension (13; 413) pour tendre la tige de tension (13; 413) et le tube transversal (12; 412).

8. Suspension d'essieu de roue selon la revendication 3, dans laquelle les moyens de mise en tension comprennent une tige de mise en tension qui s'étend à travers les tubes transversaux alignés (112), ou, alternativement, comprend deux tiges de mise en tension (123), chaque tige de mise en tension (123) s'étendant à travers l'un des tubes transversaux alignés (112).

9. Suspension d'essieu de roue selon la revendication 7 ou 8, dans laquelle le bras oscillant (4) a un œillet (41) à son extrémité avant et dans laquelle la tige de mise en tension (13; 123) s'étend à travers l'œillet (41) du bras oscillant (4) pour servir de pivot ayant un axe qui est le même que l'axe de pivot du bras oscillant (4).

10. Suspension d'essieu de roue selon la revendication 7 ou 8, dans laquelle la tige de mise en tension (413) s'étend à travers une partie du corps de palier (403), située de manière décalée par rapport à l'axe de pivotement du bras oscillant (4), par ex. sous l'extrémité avant du bras oscillant (4).

11. Suspension d'essieu de roue selon la revendication 2, dans laquelle le tube transversal a des parties filetées (12A; 213; 312A) munies d'un filetage femelle, et dans laquelle les moyens de mise en tension comprennent des boulons filetés (19) destinés à s'étendre à travers un trou dans les corps de palier respectifs (3; 303) et à être vissés dans les parties d'extrémité filetées respectives (12A; 213; 312A), dans laquelle le filetage femelle prévu dans la partie filetée (12A; 213; 312A) du tube est espacé de l'extrémité correspondante du tube qui est serré contre le corps de palier, dans laquelle, de préférence, la distance (D) entre ladite partie filetée (12A; 213; 312A) et ladite extrémité correspondante est d'au moins 1 mm.

12. Suspension d'essieu de roue selon la revendication 3, dans laquelle chacun des tubes transversaux alignés (112) a une première partie filetée munie d'un filetage femelle, et dans laquelle les moyens de mise en tension comprennent un premier boulon fileté destiné à s'étendre à travers un trou dans le corps de palier associé et à être vissé dans la première partie filetée.

13. Suspension d'essieu de roue selon la revendication 12, dans laquelle:
- chacun des tubes transversaux alignés a une deuxième partie filetée munie d'un filetage femelle, et dans laquelle les moyens de mise en tension comprennent un deuxième boulon fileté destiné à s'étendre à travers un trou dans le connecteur; ou
- chacun des tubes transversaux alignés a une deuxième partie filetée munie d'un filetage mâle prévu sur le côté extérieur du tube, et dans laquelle les moyens de mise en tension comprennent un alésage avec un filetage femelle dans le connecteur pour coopérer avec le filetage mâle sur le tube.

14. Suspension d'essieu de roue selon l'une quelconque des revendications 11 à 13, dans laquelle le bras oscillant (4) a un œillet (41) à son extrémité avant, et dans lequel le boulon ou le premier boulon qui s'étend à travers le corps de palier respectif s'étend également à travers l' œillet (41) associé au bras oscillant (4) pour servir de pivot pour le bras oscillant (4).

15. Suspension d'essieu de roue selon la revendication 6, dans laquelle:
- les barres d'entretoise (10) sont réalisées d'une seule pièce à partir d'une tige ou d'un tube de section circulaire qui est pliée sensiblement en forme de V, dans laquelle, de préférence, la tige ou le tube sensiblement en forme de V présente une partie de jonction centrale (17) qui joint les barres d'entretoise, dans laquelle la partie de jonction centrale est reçue au moins partiellement dans un passage de logement dans le bloc central (11; 111; 211); ou
- les barres d'entretoise sont reliées à leur extrémité inférieure avec le bloc central par une liaison filetée.
